(19) Europäisches Patentamt / European Patent Office / Office européen des brevets

(11) **EP 4 282 509 A1**

(12) **EUROPEAN PATENT APPLICATION**

(43) Date of publication:
**29.11.2023 Bulletin 2023/48**

(21) Application number: **23158908.6**

(22) Date of filing: **28.02.2023**

(51) International Patent Classification (IPC):
**B01D 39/16** (2006.01)    **B01D 46/00** (2022.01)
**B01D 46/24** (2006.01)    **B01D 46/62** (2022.01)
**B01D 46/52** (2006.01)

(52) Cooperative Patent Classification (CPC):
**B01D 39/1676; B01D 46/003; B01D 46/2403;**
**B01D 46/521; B01D 46/62;** B01D 2239/0457

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **23.05.2022 EP 22174842**

(71) Applicant: **MANN+HUMMEL LIFE SCIENCES &**
**ENVIRONMENT HOLDING**
**SINGAPORE PTE. LTD.**
**Singapore 139234 (SG)**

(72) Inventor: **PRICE, Andrew**
**58256 Ennepetal (DE)**

(74) Representative: **Mann + Hummel Intellectual**
**Property**
**Mann + Hummel**
**International GmbH & Co. KG**
**Schwieberdinger Straße 126**
**71636 Ludwigsburg (DE)**

(54) **MELAMINE-BASED FOAM FILTER MEDIUM**

(57)    The invention refers to a filter medium (10) for separating a dispersed fluid phase from a continuous gas phase, wherein the filter medium (10) comprises a melamine-based foam (11), which has an active filter area of at least 0.3 m$^2$.

**Fig. 2**

EP 4 282 509 A1

## Description

### Technical field

The present invention refers to a filter medium for separating a dispersed fluid phase from a continuous gas phase.

### Background

In various technical fields, it is desired to remove a fluid phase from a gas phase in which the liquid of the fluid phase is dispersed, e.g. as an aerosol.

For instance, in the metal working industry, cooling lubricants are used to lube and cool a work piece during machining or forming. Cooling lubricant emissions result from these machining and forming processes. The emissions occur in particular as aerosols, vapors and smoke. Thus, there is a need to remove these emissions from the ambient air.

Often, glass fiber based filter media are employed to this end. However, released fibers are harmful to health. Thus, special care has to be exercised during handling and transportation of theses fiber filter media. Furthermore, fiber based filter media exhibit a significant pressure loss, thus requiring considerable power to blow the air through the fiber filter media.

US 2018/0171093 A1 discloses a metallized open-cell melamine formaldehyde foam as an antistatic filter, or to separate, e.g., mixtures of oil and water. In particular, water can be separated from fuel (e.g., water from kerosene, gasoline or diesel) or fuel can be separated from water.

US 2012/0288758 A1 discloses a resin molded body, such as melamine foam, that serves as a base material. A thin conductive aluminium layer is formed on the surface of the resin molded body. The resin molded body can be removed by decomposition to obtain a conductive aluminum porous body. The aluminium porous body may be used for applications of various filters such as an oil mist separator and a grease filter.

It is an object of the invention to improve the separation of dispersed fluid from a gas phase.

This is achieved by a filter medium according to claim 1, a filter element according to claim 9, a filter system according to claim 11 and a use of a filter medium according to claim 14. Advantageous embodiments are given in the subclaims and the description.

### Disclosure of the invention

In accordance with the invention, a filter medium for separating a dispersed fluid phase from a continuous gas phase is provided. The filter medium is in other words adapted to separate dispersed liquid from a gas mixture, which flows through the filter medium during use.

The filter medium comprises a melamine-based foam, which has an active filter area of at least 0.3 m². Preferably, the active filter area, through which the gas phase can contact during use, is at least 0.5 m², 1 m², 1.5 m², or 1.55 m², particularly preferably at least 2 m². The active filter area according to the invention advantageously provides an acceptable pressure drop across the filter medium as compared with the same active area of a traditional glass fiber based filter media.

The filter medium according to the invention has various advantages and beneficial effects.

Melamine-based foam is conveniently available. Furthermore, melamine-based foam is extremely lightweight. A filter medium weighing less than 1 kg may fulfill the same filtering functions as a 10-20 kg glass fiber filter medium.

The use of melamine-based foam allows for construction of a filter medium, which has a low flow resistance, in particular as compared to glass fiber based filter media, thereby contributing to the advantageous pressure drop mentioned above. This allows saving energy, since less power is required to convey the gas phase with the dispersed fluid through the filter medium. In particular, a moderate fan speed suffices for blowing the gas through the filter medium.

The filter medium can be constructed of a single material; thus, it does not require separation for disposal. In particular, the melamine-based foam can easily be incinerated.

Due to the sound absorbing properties of the foam, the filter medium can act as a silencer, which reduces the noise level of a filter system with the filter medium.

The material provides thermal insulation and can therefore be of value to reduce energy costs.

The melamine-based foam material has high fire resistance. In particular, the foam may achieve a class B or C rating according to DIN EN13501-1:2018.

Since the foam does not contain any fibers, it is not associated with any irritating effects caused by the release of fibers, and so there is no need for additional safety measures during handling and transportation.

The filter medium can be used in numerous applications. An important application for the filter medium is the filtration of cooling lubricants and their emissions as aerosols, vapors, smoke and particulate contamination from ambient air. The filter medium is also useful in other filter applications such as HVAC (Heating, Ventilation and Air Conditioning), power generation, clean room, home and industrial air purifications systems.

Preferably, the filter medium comprises an open cell foam. When gas with dispersed fluid is directed through the filter medium, microscopic aerosols such as oil are collected in the foam, for example a raw side of the foam. The fluid, which was dispersed in the gas phase, joins and coalesces on the surface of the cells of the foam to form large droplets or a liquid film. Upon attaining certain weight, the droplets or film falls through the medium, and/or along the surface of the cells, by gravity. This drainage effect causes a self-cleaning filter medium.

The disclosed foam may be provided as a block, e.g., in the shape of a cuboid. The foam may be adapted to increase the active filter area through which the gas phase flows through. The foam may be adapted to achieve the disclosed active filter area. The block of foam may be adapted to result in a shape similar to the bellows of an accordion. Parts of the block of foam may be removed to result in bellows or a pleated structure or a structure with a plurality of V's and/or U's. The filter medium may comprise a melamine-based foam shaped as bellows, or pleats, or a plurality of V's and/or U's. The foam may be arranged such that the mouths of the V's or U's face the flow direction of the gas phase.

As may be appreciated, the gas phase may fill the voids or valleys of the bellows before penetrating the foam or entering the cells of the foam. Thickness of the foam describes the minimum distance which the gas phase must travel through the foam in order to pass from a raw side through the filter medium to a clean side. The filter medium may be adapted such that a thickness of the foam is at least 10 mm, preferably at least 20 mm. This increases the filtration efficiency of the filter medium. In general, a higher thickness of foam results in a higher particulate filtration efficiency. However, a higher thickness of foam may result in a higher increase of pressure drop, that is, the pressure required to convey the gas phase with the dispersed fluid through the filter medium may be higher. In an example, the filter medium may be arranged such that a thickness of the foam is from about 10 mm to about 100 mm, or from about 10 mm to about 80 mm, or from about 10 mm to about 60 mm, or from about 20 mm to about 100 mm, or from about 30 mm to about 100 mm, or from about 20 mm to about 80 mm, or from about 20 mm to about 60 mm.

Preferably, the filter medium has a particulate filtration efficiency ePM10 of at least 50 % according to ISO16890:2016. This means that at least 50 % of particles smaller than 10 $\mu$m are captured in the filter medium. In particular, according to ISO16890:2016, ePMx refers to the percentage efficiency of an air cleaning device, such as the disclosed filter medium, filter element or filter system, to reduce the mass concentration of particles with an optical diameter between 0.3 $\mu$m and x $\mu$m.

A thickness of foam of about or at least 20 mm may provide a particulate filtration efficiency for particles of diameters of 10 $\mu$m or even smaller, e.g., ePM2.5, of 50% or more according to ISO16890:2016. In an even further preferable example, a thickness of about or at least 30 mm may provide a particulate filtration efficiency ePM1 of >80% according to ISO16890:2016. Due to the self-cleaning effect described above, a 30 mm thick filter medium can achieve a particulate filtration efficiency ePM1 of more than 80 % according to ISO 16890:2016, with an increase of pressure drop after 24 hours of less than 20%.

The depth of the filter medium describes a dimension of the volumetric space occupied by the filter medium, typically along a primary flow direction of the gas phase. Typically, the dimensions of the initial block of foam form the basis of the dimensions of the volumetric space occupied by the filter medium. The dimensions of the initial block of foam may eventually form the basis of the dimensions of the filter element. Hence, a depth of the filter medium may be a dimension of the filter block, e.g., a length. Where the filter medium is adapted into bellows, the depth may be the perpendicular distance from the tip of a bellow to the mouth of the bellow. A depth of the filter medium may be about or at least 50 mm, 100mm, 150 mm, or preferably about or at least 200 mm. This allows for a compact construction, while providing a large active area. The depth is typically measured along a primary flow direction.

Preferably, the melamine-based foam is a melamine formaldehyde condensation product. This kind of material is particularly effective for separating oil from air.

A suitable foam is available from BASF as Basotect® G+.

A specific density of the foam may be at least 3 kg/m$^3$, preferably at least 10 kg/m$^3$. The specific density may be at most 100 kg/m$^3$, preferably at most 75 kg/m$^3$.

The foam may have at least 50 cells per 25 mm of a dimension such as length, thickness, depth or width, preferably at least 100 cells per 25 mm, and/or at most 300 cells per 25 mm, preferably at most 200 cells per 25 mm. A foam with this number of cells per dimension (i.e. an according average cell size) has proven to be particularly effective in filtering dispersed fluid from a gas phase while maintaining limited flow resistance.

The foam can be thermally formed. This can result in a more rigid structure of the filter medium. Mounting the filter medium into a frame or a filter system is thereby simplified.

The present invention also relates to a filter element. The filter element comprises a filter medium according to the invention, as described above, and a frame, which holds the filter medium. Typically, the frame surrounds the filter medium. The foam may be fitted into the frame. Preferably, the filter medium is glued to the frame. The frame can be made of plastic or metal. The frame may comprise at least one drain opening to remove the coalesced fluid collected at the base of the filter medium.

The present invention further relates to a filter system. The filter system comprises a housing and a plurality of filter stages. At least one of the filter stages comprises a filter element according to the invention, as described above. Generally, the housing comprises an inlet to allow a continuous phase of a gas mixture comprising a dispersed fluid phase to enter the filter system and an outlet to allow a continuous gas phase having substantially no dispersed fluid phase to exit the filter system. The filter system may comprise a ventilator to convey the gas phase through the filter system, e.g., by positive pressure or negative pressure.

Preferably, the filter system comprises three filter stages.

One of the filter stages, preferably the first filter stage (in flow direction), may comprise a coalescence filter element. Alternatively, the first filter stage may comprise a filter element according to the invention.

The second filter stage typically comprises a filter element according to the invention.

One of the filter stages, preferably the third filter stage, may comprise a fine filter element. Preferably, the fine filter element is a HEPA filter element.

The disclosed filter system may be fluidly connected, e.g., by a pipe, to the extraction or exhaust chamber of machines generating microscopic aerosols, such as oil mist.

Finally, the present invention relates to the use of a filter medium according to the invention, as described above, for separating a dispersed fluid phase from a continuous gas phase. According to the invention it was found, that melamine-based foam, which has an active filter area of at least 1 $m^2$, is particularly useful for removal of dispersed liquid from a gas phase.

The fluid phase may contain oil. In particular, the oil may be a cooling lubricant. The filter medium according to the invention has proven to be particularly effective for removing oil from an airflow.

**Brief description of drawings**

Other advantages and features of the invention will be appreciated from the following description of embodiments of the invention with reference to the figures of the drawing, which show significant details, and from the claims. The individual features, as described above or explained below, may each be implemented individually or implemented together in any useful combination in variants of the invention.

Fig. 1    shows a first filter medium according to the invention in a schematic perspective view;

Fig. 2    shows the filter medium of Fig. 1 in a schematic sectional view;

Fig. 3    shows a second filter medium according to the invention in a schematic perspective view;

Fig. 4    shows the filter medium of Fig. 3 in a schematic sectional view;

Fig. 5    shows a filter system according to the invention in a schematic sectional view, the filter system having three filter stages, the second one being equipped with a filter element according to the invention, the filter element comprising a frame and a filter medium according to the invention.

Fig. 6    shows the recorded results of particulate filtration efficiencies of samples #1 to #5 of the examples.

Fig. 7    shows the recorded results of pressure drops across samples #1 to #5 of the examples.

**Detailed description**

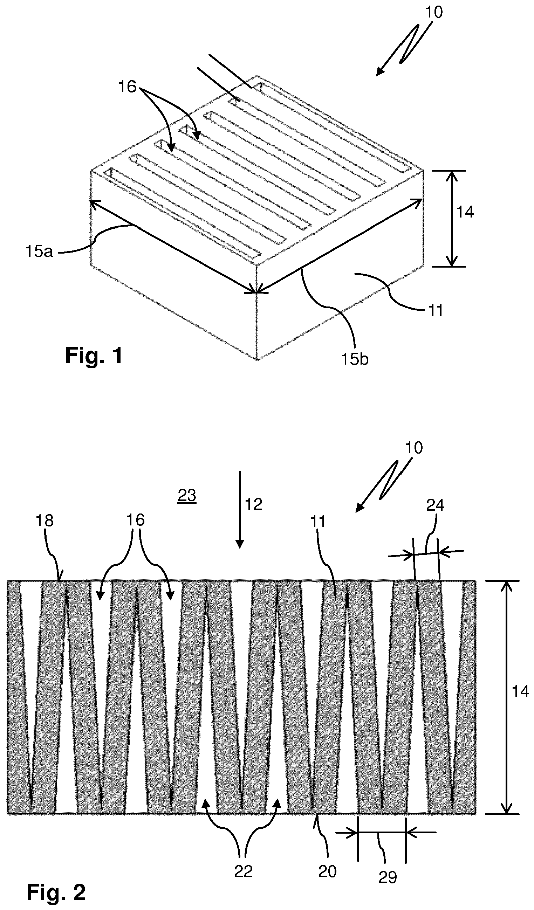

**Figs. 1** and **2** show a first filter medium **10**. The filter medium 10 consists of melamine-based foam **11**. Here, the foam is a melamine formaldehyde condensation product. The foam may have about 50 cells to about 300 cells per 25 mm of foam material. The foam has for instance 100 open cells per 25 mm of foam material, i.e. an average cell size may be 0.25 mm. A specific density of the foam may be for instance 30 kg/$m^3$.

The filter medium 10 has an overall block shape, here in the form of a cuboid. Along a primary flow direction **12**, the filter medium 10 has a depth **14** of for instance 300 mm. A total volume of the filter medium 10 may be around 0.1 $m^3$, since a width **15a, 15b** in both directions perpendicular to the depth 14 of the filter medium 10 or the primary flow direction 12 is here about 600 mm.

Several, in this embodiment seven, notches **16** are cut into the foam material from an upstream face **18**. From a downstream face **20** several, here six, further notches **22** are cut into the foam material of the filter medium 10. In the embodiment shown in Figs. 1 and 2, the notches 16 and 22 are V-shaped.

An upstream surface of the foam 11 at the plurality of notches 16 defines an active filter area of the filter medium 10. In other words, the active filter area is defined by the total surface of the filter medium 10 on a raw side **23**. The total surface area on the raw side 23 includes any surface through which the gas phase passes the filter medium 10 to the downstream surface 20 and downstream notches 22 and, in the process, is filtered. For example, the gas phase may contact the surface of a notch 16 and the surfaces of the cells of the foam 10 forming the notch 16, before passing through the foam 10 to the associated downstream notch 22. Thus, in the depicted embodiment, the total surface area may include the surface area of upstream surfaces 18, the surface area of the notches 16 and the surface area of the foam cells associated with upstream surfaces 18 and notches 16. In the depicted embodiment, the active filter area is 2.1 m$^2$ (=7 notches*0.3 m$^2$), where 0.3 m$^2$ includes the total surface area of a notch and the upstream faces associated with the notch. Note that the active filter area significantly exceeds the size of the upstream face 18 in a plan view (here 600 mm * 600 mm = 0.36 m$^2$).

The active filter area A of a notch or pleat *i* may be determined by the following formula (I), in accordance with EN ISO 29461-1 :2013 (E) Annex E.2:

$$A_i = 2 \times (H \times W + t \times W) \qquad (I)$$

where H is the height or depth 14 of the filter medium 10, W is the effective width 15a, 15b of the filter medium 10 and t is the notch or pleat tip width **29**.

The total active filter area is determined by the following formula (II):

$$A_{tot} = \text{Sum of } A_1, A_2 \ldots \text{ and } A_N \qquad (II)$$

where N is the total number of pleats.

A thickness **24** of the foam 11 from an upstream notch 16 to a downstream notch 22 is here about 30 mm.

The filter medium 10 may have a particulate filtration efficiency ePM1 according to ISO 16890:2016 of 80%.

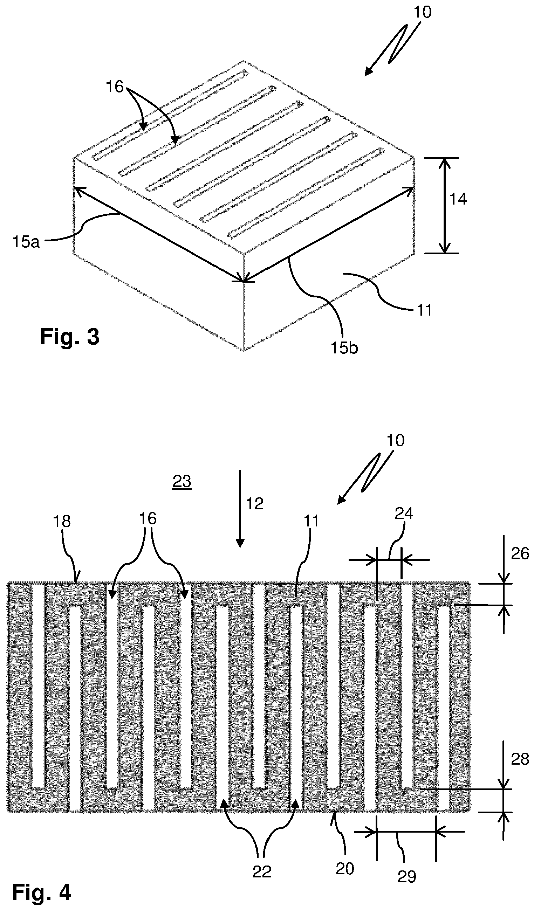

**Figs. 3** and **4** show a second filter medium 10. The filter medium 10 consist of melamine-based foam 11. The foam is a melamine formaldehyde condensation product as in the first embodiment. The foam has for instance 125 open cells per 25 mm of foam material, i.e. an average cell size may be 0.2 mm. A specific density of the foam may be for instance 40 kg/m$^3$.

The filter medium 10 has an overall block shape, here in the form of a cuboid. Along a primary flow direction 12, the filter medium 10 has a depth 14 of for instance 280 mm. A total volume of the filter medium 10 may be around 0.1 m$^3$, since a width 15a, 15b in both directions perpendicular to the depth 14 of the filter medium 10 or the primary flow direction 12 is here about 620 mm.

Several, in this embodiment six, notches 16 are cut into the foam material from an upstream face 18. From a downstream face 20 several, here also six, further notches 22 are cut into the foam material of the filter medium 10. In the embodiment shown in Figs. 3 and 4, the notches 16, 22 are U-shaped with rectangular transitions between their short and long legs.

An upstream surface of the foam 11 at the plurality of notches 16 defines an active filter area of the filter medium 10. In the depicted embodiment, the active filter area is 1.8 m$^2$ (=6 notches*0.3 m$^2$). Note that the active filter area significantly exceeds the size of the upstream face 18 in a plan view (here 620 mm * 620 mm = 0.38 m$^2$).

A thickness 24 of the foam 11 from an upstream notch 16 to a downstream notch 22 is here about 32 mm. A thickness **26** from the upstream face 18 to one of the downstream notches 22 or a thickness **28** from one of the upstream notches 16 to the downstream face may also be 32 mm.

The filter medium 10 may have a particulate filtration efficiency ePM1 according to IS16890:2016 of 85%.

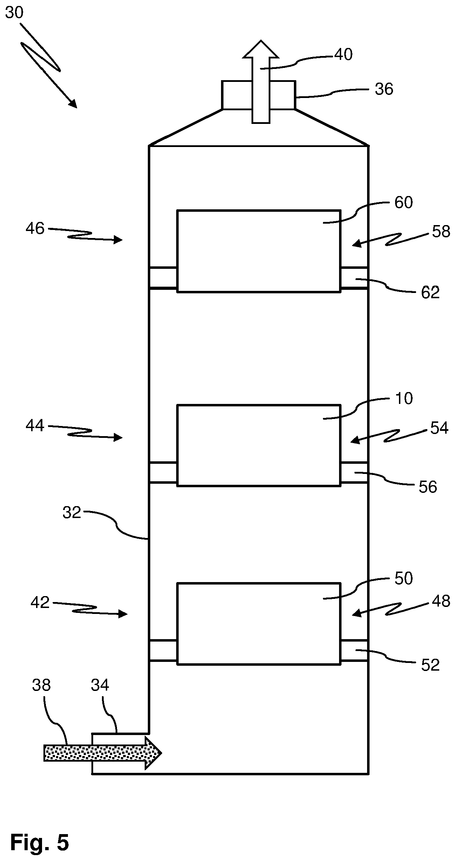

**Fig. 5** shows a filter system **30**. The filter system 30 comprises a housing **32**. An inlet **34** and an outlet **36** are formed at the housing 32. A raw flow **38** consisting of a continuous phase of a gas mixture (e.g. air) comprising a dispersed fluid phase (e.g. oil, in particular cooling lubricant) is directed into the housing 32 of the filter system 30 at the inlet 34. At the outlet 36 a filtered flow **40** consisting of the continuous gas phase and having substantially no dispersed fluid phase exits from the housing 32. A pipe system (not depicted) may be attached to the housing 32 at the inlet 34 and the outlet 36.

The filter system 30 comprises three filter stages **42**, **44**, **46**. The flow is consecutively directed through all three filter stages 42, 44, 46.

The first filter stage 42 has a coalescence filter element **48**. A coalescer medium **50** is sealingly held to the housing 32 by a frame **52**.

The second filter stage 44 has a melamine-based foam filter element **54**. The filter element 54 comprises a filter medium 10, for instance as depicted in Figs. 1 and 2 or Figs. 3 and 4. The filter medium 10 is attached to a frame **56**. The frame 56 may be made of plastic. Here, the filter medium 10 is glued to the frame 56. The frame 56 is sealingly held to the housing 32. The filter medium 10 is in the form of bellows, for instance as depicted in Figs. 1 and 2 or Figs. 3 and 4, with the mouths of the bellows 16 facing the flow direction, thereby increasing active surface area. The dispersed fluid phase coalesces on the bellows 16 on the raw side adjacent to the flow exiting the first filter stage 42. At some point, the coalesced fluid drips by gravity and collects at the base of frame 56. Frame 56 has at least one drain opening (not shown) to remove the collected fluid from the filter system 30.

The third filter stage 46 has a fine filter element **58**, here a HEPA filter element. A fine filter medium **60,** in the depicted embodiment a HEPA filter medium, is sealingly held to the housing 32 by a frame **62**.

In summary, the invention relates to a filter medium made with melamine-based foam. For efficient filtration of a gas flow carrying dispersed fluid, an active filter area to which the flow is directed on the upstream side of the filter medium is at least 1 m². The fluid can be oil, such as a cooling lubricant. Typically, the fluid is disperesed in the form of small droplets in a continuous gas phase such as air. The fluid is separated from the gas phase by the melamine-based foam filter medium.

The filter medium will be described in more detail based on the following non-limiting examples.

Blocks of Basotect® G+ from BASF were used as foam 11. Notches were cut into each block of foam to result in a bellow structure, as shown in Figs. 1 to 4. The dimensions of each sample are shown in Table 1 below.

[Table 1]

| Sample # | Dimensions of block 10 | | Foam 11 | |
|---|---|---|---|---|
| | Width 15a, 15b | Depth 14 | Thickness 24 | Active filter area |
| 1 | 592 mm × 592 mm | 292 mm | 20 mm | 1.1 m² |
| 2 | 592 mm × 592 mm | 292 mm | 25 mm | 1.1 m² |
| 3 | 600 mm × 600 mm | 292 mm | 37 mm | 1.65 m² |
| 4 | 592 mm × 592 mm | 100 mm | 50 mm | 0.37 m² |
| Glass fiber based filter media | | | | |
| 5 | 600 mm × 600 mm | 292 mm | 5 mm | 4.8 m² |

The samples above were set up in a test rig, similar to Fig. 5, to measure pressure drop and efficiency in oil-mist separation. The tests were done according to the following procedure:

- The weight of the clean test sample is measured.
- The test sample is installed in the second filter stage 44 of the test rig. No filter is installed in the first filter stage 42. That is, the test sample is installed in the second filter stage 44 without any prefilter in the first filter stage 42. A HEPA filter element is installed in the third filter stage 46.
- A fan is started and air flow is adjusted to 1600 m³/h.
- A particle shaver is provided at inlet 34 to introduce particles of 0.4 $\mu$m in diameter. A control system for particle counting and sampling is started. The Grimm 1.109 particle counter is used, which is an optical aerosol spectrometer.
- Valve for pressurized air is opened. The particles are diluted 100x with air at a factor of 1:100.
- An oil mist generator is provided at inlet 34. The oil pump of the oil mist generator is started. A mineral oil (BACH XNF 28 from Statoil) is pumped into the test rig with a predefined pump capacity of 2.1 L/h. The oil is sprayed through a nozzle of the oil mist generator onto a heated metal plate heated at 200-210°C. The oil mist concentration with this configuration is in the range of 50 mg/m³.
- Oil loading of the filter is commenced for approximately 40 hours. At least five efficiency measurements are made during the loading and the pressure drop of the tested sample is recorded. For the efficiency measurements of the 0.4 $\mu$m particles, the calculation is as follows:

$$\text{Efficiency} = (\text{Count of particles at inlet 34 - Count of particles at outlet 36})/(\text{Count of particles at inlet 34}) \times 100\%$$

- When the test is concluded, the tested sample is weighed and the weight is recorded.

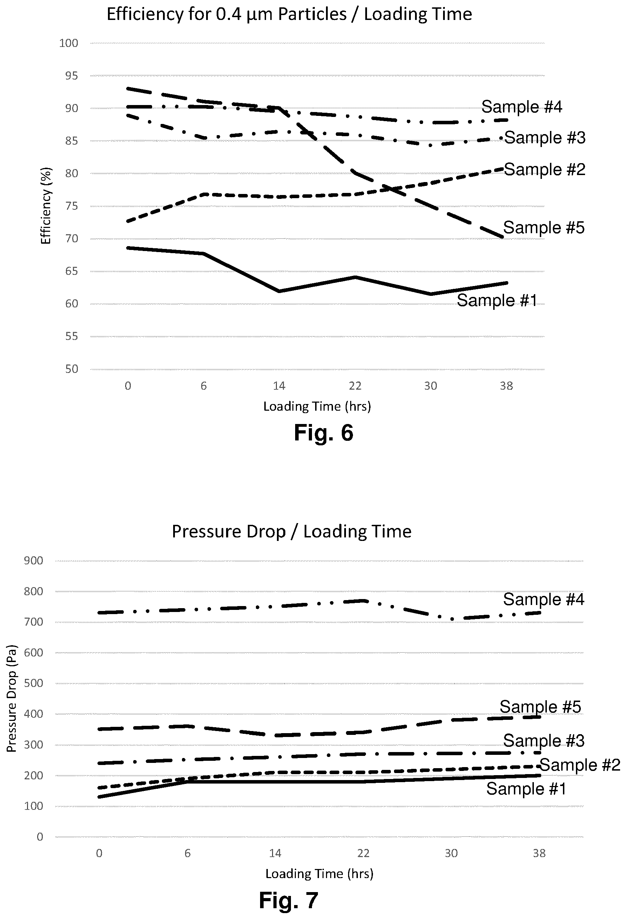

The recorded results of the efficiencies are shown in Fig. 6. The recorded results of the pressure drops are shown in Fig. 7. As can be seen, comparing samples #1, #2 and #3, a higher thickness of foam increases the efficiency, which is however accompanied with slight increases in pressure drop. It is shown from sample #4 that a decrease in active filter area greatly increases the pressure drop, even though its higher thickness increases the efficiency. Comparing sample #5 with the rest of the samples, the efficiency of traditional glass fiber based filter media sharply declines after 14 hours, whereas the efficiency of foam decreases slightly over time or even increases in the case of sample #2 possibly due to the self-cleaning effect. While the tests performed and efficiencies calculated in these examples are not according to ISO16890:2016, the efficiencies calculated provide a representation of the particulate filtration efficiency according to ISO16890:2016 that can be achieved by the disclosed filter medium, filter element or filter system.

**Reference Numbers**

Filter medium **10**
Foam **11**
Primary flow direction **12**
Depth **14**
Width **15a, 15b**
Upstream notches **16**
Upstream face **18**
Downstream face **20**
Downstream notches **22**
Raw side **23**
Thickness **24, 26, 28**
Pleat tip width **29**
Filter system **30**
Housing **32**
Inlet **34**
Outlet **36**
Raw flow **38**
Filtered flow **40**
Filter stages **42**, **44**, **46**
Coalescence filter element **48**
Coalescer medium **50**
Frame **52**
Melamine-based foam filter element **54**
Frame **56**
Fine filter element **58**
Fine filter medium **60**
Frame **62**

**Claims**

1. Filter medium (10) adapted to separate a dispersed fluid phase from a continuous gas phase, wherein the filter medium (10) comprises a melamine-based foam (11) shaped as bellows, which has an active filter area of at least 0.3 m$^2$.

2. Filter medium (10) according to claim 1, wherein the active filter area is at least 1 m$^2$, or at least 1.55 m$^2$, preferably at least 2 m$^2$.

3. Filter medium (10) according to any one of the preceding claims, wherein a thickness (24, 26, 28) of the foam (11) is at least 10 mm, preferably at least 20 mm, and at most 100 mm, preferably at most 60 mm.

4. Filter medium (10) according to any one of the preceding claims, wherein a depth (14) of the filter medium (10) is at least 50 mm, preferably at least 200 mm.

5. Filter medium (10) according to any one of the preceding claims, wherein the melamine-based foam (11) is a melamine formaldehyde condensation product.

6. Filter medium (10) according to any one of the preceding claims having a particulate filtration efficiency ePM10 of at least 50 % according to ISO16890:2016.

7. Filter medium (10) according to any one of the preceding claims wherein a specific density of the foam (11) is at least 3 kg/m$^3$ and/or at most 100 kg/m$^3$.

8. Filter medium (10) according to any one of the preceding claims wherein the foam (11) has at least 50 cells per 25 mm of a dimension of the foam and/or at most 300 cells per 25 mm of a dimension of the foam.

9. Filter element (54) comprising a filter medium (10) according to any one of the preceding claims and a frame (56), which holds the filter medium (10).

10. Filter element (54) according to claim 9, wherein the frame (56) is made of plastic or metal.

11. Filter system (30) comprising a housing (32) and a plurality of filter stages (42, 44, 46), wherein at least one of the filter stages (44) comprises a filter element (54) according to claim 9 or 10.

12. Filter system (30) according to claim 11, wherein at least one of the filter stages (42) comprises a coalescence filter element (48).

13. Filter system (30) according to claim 11 or 12, wherein at least one of the filter stages (46) comprises a fine filter element (58), in particular a HEPA filter element.

14. Use of a filter medium (10) according to any one of claims 1 to 8 for separating a dispersed fluid phase from a continuous gas phase.

15. Use according to claim 14, wherein the fluid phase contains oil, in particular in form of a cooling lubricant.

Fig. 1

Fig. 2

Fig. 3

Fig. 4

**Fig. 5**

Efficiency for 0.4 µm Particles / Loading Time

Fig. 6

Pressure Drop / Loading Time

Fig. 7

Europäisches
Patentamt

European
Patent Office

Office européen
des brevets

# EUROPEAN SEARCH REPORT

Application Number

EP 23 15 8908

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2021/234086 A1 (ACELL IND LTD [IE]) 25 November 2021 (2021-11-25) * page 1, paragraph 1 * * page 2, paragraph 4 - page 4, paragraph 1 * * page 13, paragraph 1 * * page 21, paragraph 3 * | 1-15 | INV. B01D39/16 B01D46/00 B01D46/24 B01D46/62 B01D46/52 |
| Y | JP 2002 045625 A (KOBE STEEL LTD) 12 February 2002 (2002-02-12) * paragraphs [0001], [0010], [0013] - [0015], [0018], [0019], [0050]; figures 3,13 * | 1-15 | |
| Y | JP 2020 093521 A (BS 1 GLOBAL SYSTEMS CO LTD) 18 June 2020 (2020-06-18) * paragraphs [0001], [0008], [0027] - [0031], [0034]; figures 2,3; example 1 * | 1-13 | |
| A | | 14,15 | |
| Y | JP 2009 167248 A (BRIDGESTONE CORP) 30 July 2009 (2009-07-30) * paragraphs [0001], [0008], [0010], [0041], [0042] * | 1-13 | |
| A | | 14,15 | TECHNICAL FIELDS SEARCHED (IPC) |
| Y | EP 1 473 070 A1 (BRIDGESTONE CORP [JP]) 3 November 2004 (2004-11-03) * paragraph [0061]; example 1 * | 1-15 | B01D |
| A | WO 2010/051091 A1 (MECS INC [US]; ZIEBOLD STEVEN A [US] ET AL.) 6 May 2010 (2010-05-06) * paragraphs [0001], [0015], [0019]; figures 3,5 * | 1-15 | |

The present search report has been drawn up for all claims

| Place of search | Date of completion of the search | Examiner |
|---|---|---|
| The Hague | 19 September 2023 | Howe, Patrick |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 15 8908

This annex lists the patent family members relating to the patent documents cited in the above-mentioned European search report.
The members are as contained in the European Patent Office EDP file on
The European Patent Office is in no way liable for these particulars which are merely given for the purpose of information.

19-09-2023

| Patent document cited in search report | | Publication date | Patent family member(s) | | Publication date |
|---|---|---|---|---|---|
| WO 2021234086 | A1 | 25-11-2021 | EP | 4153255 A1 | 29-03-2023 |
| | | | GB | 2596276 A | 29-12-2021 |
| | | | US | 2023190978 A1 | 22-06-2023 |
| | | | WO | 2021234086 A1 | 25-11-2021 |
| JP 2002045625 | A | 12-02-2002 | NONE | | |
| JP 2020093521 | A | 18-06-2020 | NONE | | |
| JP 2009167248 | A | 30-07-2009 | JP | 5353010 B2 | 27-11-2013 |
| | | | JP | 2009167248 A | 30-07-2009 |
| EP 1473070 | A1 | 03-11-2004 | AU | 2003211913 A1 | 02-09-2003 |
| | | | EP | 1473070 A1 | 03-11-2004 |
| | | | JP | WO2003066193 A1 | 26-05-2005 |
| | | | US | 2004262217 A1 | 30-12-2004 |
| | | | WO | 03066193 A1 | 14-08-2003 |
| WO 2010051091 | A1 | 06-05-2010 | AU | 2009310316 A1 | 06-05-2010 |
| | | | CN | 102215933 A | 12-10-2011 |
| | | | EP | 2365854 A1 | 21-09-2011 |
| | | | JP | 2012507392 A | 29-03-2012 |
| | | | KR | 20110097762 A | 31-08-2011 |
| | | | MA | 32732 B1 | 02-10-2011 |
| | | | RU | 2011121607 A | 10-12-2012 |
| | | | TN | 2011000183 A1 | 17-12-2012 |
| | | | US | 2011023428 A1 | 03-02-2011 |
| | | | WO | 2010051091 A1 | 06-05-2010 |
| | | | ZA | 201103093 B | 26-09-2012 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20180171093 A1
- US 20120288758 A1